(19) Europäisches Patentamt
European Patent Office
Office européen des brevets

(11) **EP 4 775 973 A1**

(12) **DEMANDE DE BREVET EUROPEEN**

(43) Date de publication:
**15.07.2026 Bulletin 2026/29**

(21) Numéro de dépôt: **25227295.0**

(22) Date de dépôt: **26.12.2025**

(51) Classification Internationale des Brevets (IPC):
***G01N 27/416*** (2006.01)

(52) Classification Coopérative des Brevets (CPC):
**G01N 27/4163**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **13.01.2025 FR 2500300**

(71) Demandeur: **Commissariat à l'Energie Atomique et aux Energies Alternatives**
**75015 Paris (FR)**

(72) Inventeurs:
• **THOMAS, Yohann**
  **38054 38054 (FR)**
• **MENASSOL, Gauthier**
  **38054 GRENOBLE CEDEX 09 (FR)**

(74) Mandataire: **INNOV-GROUP**
  **209 Avenue Berthelot**
  **69007 Lyon (FR)**

(54) **PROCÉDÉ DE CONTRÔLE D'UN SYSTÈME DE MESURE À PLUSIEURS CAPTEURS ÉLECTROCHIMIQUES DE MÊME TYPE ARRANGÉS EN REDONDANCE**

(57) L'invention concerne un procédé de contrôle d'un système de mesure, ledit système de mesure comportant au moins deux capteurs électrochimiques (S1, S2) de même type en redondance, mis en contact avec un même milieu à analyser, le premier capteur électrochimique (S1) comportant une première électrode de référence (RE1) et une première électrode de travail (WE1), et le deuxième capteur électrochimique (S2) comportant une deuxième électrode de référence (RE2) et une deuxième électrode de travail (WE2), chaque capteur électrochimique étant apte à mesurer des valeurs d'une grandeur électrique en vue de déterminer des valeurs d'un même paramètre chimique à partir d'une courbe de calibration, ledit procédé consistant à exécuter une phase de remédiation (PH_3) lorsque l'une des électrodes de référence ou de travail des deux capteurs électrochimiques est défaillante.

Fig. 2

EP 4 775 973 A1

## Description

## Domaine technique de l'invention

L'invention concerne un procédé de contrôle d'un système de mesure à plusieurs capteurs électrochimiques de même type, arrangés en redondance.

L'invention concerne également le système de mesure apte à mettre en œuvre ledit procédé.

## Etat de la technique

Un capteur électrochimique est configuré pour convertir des signaux chimiques en signaux électriques mesurables. Son principe de base repose sur les réactions électrochimiques qui se produisent à l'interface entre un matériau sensible et une solution chimique. Ces réactions génèrent un courant électrique ou une différence de potentiel, qui peuvent être mesurés et utilisés pour quantifier la concentration d'une substance cible. Il existe différents types de capteurs électrochimiques, tels que les capteurs d'oxygène, les capteurs de pH, les capteurs d'ions sélectifs et les capteurs d'espèces chimiques spécifiques, chaque type de capteur utilisant un matériau sensible spécifique.

Les capteurs électrochimiques disposent d'une sensibilité élevée, d'une sélectivité et d'un temps de réponse court. Ils sont également relativement compacts, facilement intégrables, peu coûteux et faciles à utiliser. Ils sont par conséquent largement utilisés dans de nombreux domaines, tels que la surveillance de la qualité de l'eau, l'analyse des gaz, le contrôle des processus industriels et les dispositifs médicaux.

Un capteur électrochimique est constitué d'au moins deux électrodes, désignées électrode de travail et électrode de référence. Les capteurs ampérométriques peuvent accueillir une électrode additionnelle, dite contre-électrode.

Ces capteurs peuvent subir des défaillances, ces défaillances pouvant avoir plusieurs origines :

- Electrochimique : dégradation prématurée de la couche sensible, adsorption d'une espèce non souhaitée et impactant la réponse du capteur.
- Mécanique : dégradation physique de l'électrode, décollement de celle-ci,...
- Electronique : dégradation d'une piste électrique ou bien de la reprise de contact électrique allant vers l'électronique de mesure.

La dégradation du capteur a un effet immédiat sur le calcul de la concentration d'un analyte. En effet, celle-ci étant calculée à partir de la donnée physique mesurée (différence de potentiel, courant, impédance, ...) en utilisant la courbe de calibration, une valeur erronée voire aberrante est alors obtenue. Une intervention humaine ou machine peut alors se révéler nécessaire pour réparer/remplacer le capteur.

Par ailleurs, comme certaines des applications utilisent un automate de régulation, il est évident qu'une défaillance de capteurs engendre la transmission d'une concentration erronée et très lointaine du réel, impactant donc la régulation de l'automate et le procédé dans son ensemble.

Pour remédier à la défaillance d'un capteur, il est connu de placer au moins deux capteurs en redondance, chaque capteur pouvant pallier une défaillance de l'autre. Cependant, cette situation de secours ne peut être que temporaire et peut être considérée comme trop dégradée par rapport à la situation initiale.

Les demandes de brevets US2024/366127A1 et US2024/324912A1 décrivent des solutions permettant à un dispositif de mesure de continuer à fonctionner, même en cas de défaillance de l'une de ses électrodes

Le but de l'invention est de proposer une solution permettant, dans un système de mesure à au moins deux capteurs électrochimiques de même type et en redondance, de conserver un fonctionnement du système de mesure le moins dégradé possible, même en cas de défaillance d'un capteur.

Par ailleurs, un autre objectif de l'invention est de proposer une solution pour détecter la défaillance d'un capteur électrochimique et, plus précisément, pour identifier l'électrode défaillante. En fonction de l'électrode défaillante détectée, l'invention est en mesure de proposer une solution de repli moins dégradée que celle connue dans l'état de la technique.

## Exposé de l'invention

**Ce but est** atteint par un procédé de contrôle d'un système de mesure, ledit système de mesure comportant au moins deux capteurs électrochimiques de même type en redondance, mis en contact avec un même milieu à analyser pour mesurer parallèlement un même analyte, le premier capteur électrochimique comportant une première électrode de référence et une première électrode de travail, et le deuxième capteur électrochimique comportant une deuxième électrode de référence et une deuxième électrode de travail, chaque capteur électrochimique étant apte à mesurer des valeurs d'une grandeur électrique en vue de déterminer des valeurs d'un même paramètre chimique à partir d'une courbe de calibration, ledit procédé consistant à exécuter une phase de remédiation lorsque l'une des électrodes de référence ou de travail des deux capteurs électrochimiques est défaillante, ladite phase de remédiation consistant à :

- Lorsque l'électrode défaillante est la première électrode de référence ou la deuxième électrode de référence,

  ○ Activer un nouveau capteur électrochimique entre chaque électrode de travail et l'électrode de référence non défaillante, et

○ Déterminer une courbe de calibration associée à chaque nouveau capteur,

- Lorsque l'électrode défaillante est la première électrode de travail ou la deuxième électrode de travail,

○ Activer un nouveau capteur électrochimique entre l'électrode de travail non défaillante et chaque électrode de référence,
○ Déterminer une courbe de calibration associée à chaque nouveau capteur.

Selon une particularité, le procédé comporte une phase préalable d'initialisation comprenant des étapes de :

○ Mesure d'une valeur électrique $\Delta E_{RE\_0}$ entre la première électrode de référence et la deuxième électrode de référence,
○ Mesure d'une valeur électrique $\Delta E'_{1\_0}$ entre la première électrode de référence et la deuxième électrode de travail et d'une valeur électrique $\Delta E'_{2\_0}$ entre la deuxième électrode de référence et la première électrode de travail.

Selon une autre particularité, le procédé comporte, après la phase d'initialisation, une phase de test par comparaison, avec une première valeur seuil Vth_1, d'un premier écart D1 entre une première valeur dudit paramètre chimique mesurée à l'aide du premier capteur électrochimique et une deuxième valeur dudit paramètre chimique mesurée à l'aide du deuxième capteur électrochimique.

Selon une autre particularité, le procédé comporte, après la phase de test :

- Une phase de défaut, activée lorsque ledit premier écart D1 dépasse ladite première valeur seuil Vth_1,
- Une phase d'identification d'une électrode défaillante par comparaison entre un deuxième écart D2 et une deuxième valeur seuil Vth_2, ledit deuxième écart D2 étant déterminé entre la valeur électrique $\Delta E_{RE\_0}$ mesurée lors de la phase d'initialisation et une valeur électrique $\Delta E_{RE}$ mesurée entre la première électrode de référence et la deuxième électrode de référence,
- Ladite électrode défaillante étant la première électrode de référence ou la deuxième électrode de référence lorsque le deuxième écart D2 est supérieur à la deuxième valeur seuil Vth_2,
- Ladite électrode défaillante étant la première électrode de référence lorsqu'une valeur électrique $\Delta E'_1$ mesurée entre la première électrode de référence (RE1) et la deuxième électrode de travail est différente de la valeur électrique $\Delta E'_{1\_0}$ mesurée lors de la phase d'initialisation,
- Ladite électrode défaillante étant la deuxième électrode de référence lorsqu'une valeur électrique $\Delta E'_2$

mesurée entre la deuxième électrode de référence et la première électrode de travail est différente de la valeur électrique $\Delta E'_{2\_0}$ mesurée lors de la phase d'initialisation,
- Ladite électrode défaillante étant la première électrode de travail ou la deuxième électrode de travail lorsque le deuxième écart D2 est inférieur à la deuxième valeur seuil Vth_2,
- Ladite électrode défaillante étant la première électrode de travail lorsqu'une valeur électrique $\Delta E'_1$ mesurée entre la première électrode de référence et la deuxième électrode de travail est différente de la valeur électrique $\Delta E'_{1\_0}$ mesurée lors de la phase d'initialisation,
- Ladite électrode défaillante étant la deuxième électrode de travail lorsqu'une valeur électrique $\Delta E'_2$ mesurée entre la deuxième électrode de référence et la première électrode de travail est différente de la valeur électrique $\Delta E'_{2\_0}$ mesurée lors de la phase d'initialisation.

Selon une autre particularité, lorsque le système de mesure comporte au moins un troisième capteur électrochimique du même type que le premier capteur électrochimique et que le deuxième capteur électrochimique, comportant une troisième électrode de référence et une troisième électrode de travail, ladite phase de remédiation est configurée pour tenir compte d'un paramètre spatial entre les électrodes non défaillantes lors de l'activation de chaque nouveau capteur électrochimique.

L'invention concerne également un système de mesure comportant au moins deux capteurs électrochimiques de même type en redondance, mis en contact avec un même milieu à analyser pour mesurer parallèlement un même analyte, le premier capteur électrochimique comportant une première électrode de référence et une première électrode de travail, et le deuxième capteur électrochimique comportant une deuxième électrode de référence et une deuxième électrode de travail, chaque capteur électrochimique étant employé pour déterminer un même paramètre à partir de sa courbe de calibration, ledit système de mesure comportant une unité de contrôle, l'unité de contrôle étant configurée pour mettre en œuvre le procédé de contrôle tel que défini ci-dessus.

Selon une particularité, chaque capteur électrochimique est de type potentiométrique, ampérométrique ou à mesure d'impédance.

Selon une autre particularité, la grandeur électrique est une différence de potentiel. Selon une autre particularité, le paramètre chimique est une concentration d'un analyte présent dans le milieu à analyser.

**Brève description des figures**

D'autres caractéristiques et avantages vont apparaître dans la description détaillée qui suit faite en regard des dessins annexés dans lesquels :

- La figure 1 représente l'architecture du système de mesure conforme à l'invention et illustre les grandeurs mesurées dans le cadre de la mise en œuvre du procédé de l'invention ; le système représenté utilise des capteurs de type potentiométrique à deux électrodes ;

- La figure 2 représente un diagramme montrant la phase d'initialisation, la phase de défaut et la phase d'identification d'une électrode défaillante, mises en œuvre dans le procédé de l'invention ;

- La figure 3 représente un diagramme illustrant la phase de remédiation mise en œuvre dans le procédé de l'invention ;

- La figure 4 illustre le principe de fonctionnement d'un système de mesure à deux capteurs lors de la mise en œuvre de la phase de remédiation du procédé de contrôle de l'invention ;

- La figure 5 illustre le principe de fonctionnement d'un système de mesure à trois capteurs lors de la mise en œuvre de la phase de remédiation du procédé de l'invention ;

**Description détaillée d'au moins un mode de réalisation**

Dans le cadre de l'invention, le système de mesure comporte au moins deux capteurs électrochimiques S1, S2.

Pour rappel, il existe différents types de capteurs électrochimiques, tels que les capteurs d'oxygène, les capteurs de pH, les capteurs d'ions sélectifs et les capteurs d'espèces chimiques spécifiques, chaque type de capteur utilisera un matériau sensible spécifique Un capteur électrochimique est chargé de délivrer en sortie directement une grandeur électrique mesurable. En fonction de cette grandeur électrique, on en déduit la valeur d'un paramètre chimique, en utilisant la courbe de calibration du capteur. Le paramètre chimique peut être une concentration d'un analyte.

Selon la grandeur électrique qu'il mesure, un capteur électrochimique peut être de différents types, par exemple de type potentiométrique, de type ampérométrique, ou à mesure d'impédance...

Un capteur électrochimique comporte une première électrode dite de référence et une deuxième électrode dite de travail. Dans certains cas, il peut comporter une troisième électrode appelée contre-électrode.

Les deux électrodes du capteur électrochimique sont mises en contact avec le milieu liquide à étudier et sont séparées l'une de l'autre. On vient ensuite mesurer un signal électrique entre les deux électrodes.

Chaque capteur est configuré pour mesurer une grandeur électrique (courant, différence de potentiel, conductivité).

Dans le cadre de l'invention, le système de mesure utilise au moins deux capteurs électrochimiques S1, S2 de même type et utilisés en redondance.

Les deux capteurs électrochimiques sont avantageusement intégrés sur une même plateforme, c'est-à-dire que leurs électrodes sont par exemple déposées sur un même support (par exemple un même circuit imprimé).

Les deux capteurs électrochimiques S1, S2 sont mis en contact avec un même milieu à analyser (liquide ou gaz par exemple). La plateforme support des deux capteurs électrochimiques est ainsi plongée dans ledit milieu à analyser.

Le système de mesure comporte une unité de contrôle UC à laquelle chaque capteur électrochimique S1, S2 est connectée. Cette unité de contrôle UC est chargée de recueillir les données de mesure en provenance des capteurs et de calculer les valeurs du paramètre chimique étudié, en tenant compte de la courbe de calibration de chaque capteur. Les deux capteurs étant en redondance, sauf cas de défaillance, ils sont censés produire des données identiques ou quasi-identiques.

Selon l'invention, cette unité de contrôle UC est également configurée pour exécuter le procédé de contrôle de l'invention, ce procédé de contrôle comportant avantageusement plusieurs phases distinctes, détaillées ci-dessous.

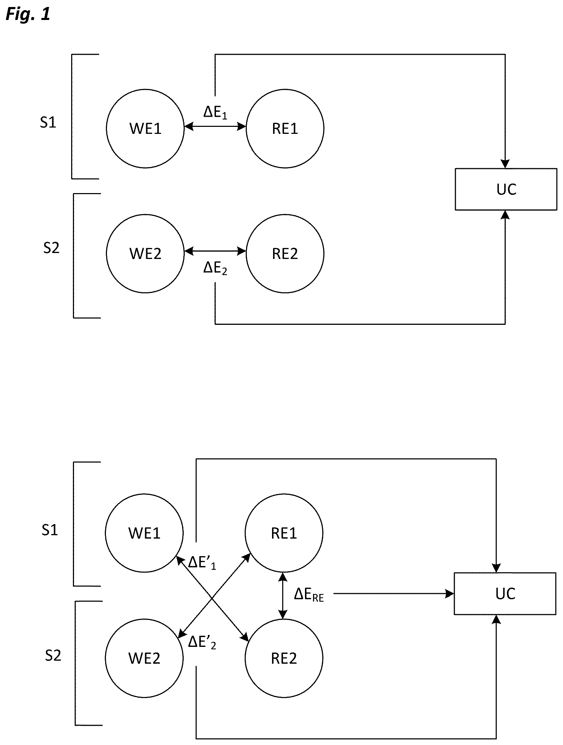

La figure 1 montre un exemple de réalisation du système de mesure employé dans l'invention.

Le système de mesure comporte ainsi une unique plateforme sur laquelle sont gravées/déposées/sérigraphiées les électrodes de chaque capteur électrochimique.

Le premier capteur électrochimique S1 comporte ainsi une première électrode de référence RE1 et une première électrode de travail WE1.

Le deuxième capteur électrochimique S2 comporte une deuxième électrode de référence RE2 et une deuxième électrode de travail WE2.

Les électrodes seront avantageusement fabriquées à partir du même procédé de fabrication.

Les quatre électrodes sont organisées en carré sur la plateforme mais tout autre agencement pourrait être envisagé. Il faut noter que l'on essaie tout de même de rapprocher au mieux les deux électrodes d'un même capteur électrochimique, pour fiabiliser les mesures réalisées en créant un chemin électrique le plus court possible. Il faut également préciser que les électrodes peuvent être agencées de manière interdigitée ou imbriquée.

Dans la suite de la description, pour simplifier, on considère que chaque capteur électrochimique S1, S2 est de type potentiométrique et est donc configuré pour mesurer une différence de potentiel comme grandeur électrique.

En liaison avec la figure 1, l'unité de contrôle récupère donc les valeurs $\Delta E1$ et $\Delta E_2$ tout au long de suivi du procédé.

Pour rappel, un capteur électrochimique de type potentiométrique répond à des lois physico-chimiques (équation de Nernst), son potentiel étant proportionnel à la concentration de l'analyte qu'il est censé mesurer. Ainsi, pour chacun des deux capteurs électrochimiques S1, S2, nous obtenons les deux équations suivantes simplifiées :

$$\Delta E_1 = \alpha_1 C_1 + \beta_1$$

$$\Delta E_2 = \alpha_2 C_2 + \beta_2$$

Suite à une calibration, deux paramètres expérimentaux sont obtenus : la sensibilité ($\alpha$) et l'offset ($\beta$).

Dans la pratique, les deux capteurs électrochimiques fonctionnent en redondance, ils mesurent donc en parallèle, c'est-à-dire simultanément, le même analyte. On peut donc faire l'hypothèse que C1 = C2 = C. Les deux équations précédentes deviennent ainsi :

$$\Delta E_1 = \alpha_1 C + \beta_1$$

$$\Delta E_2 = \alpha_2 C + \beta_2$$

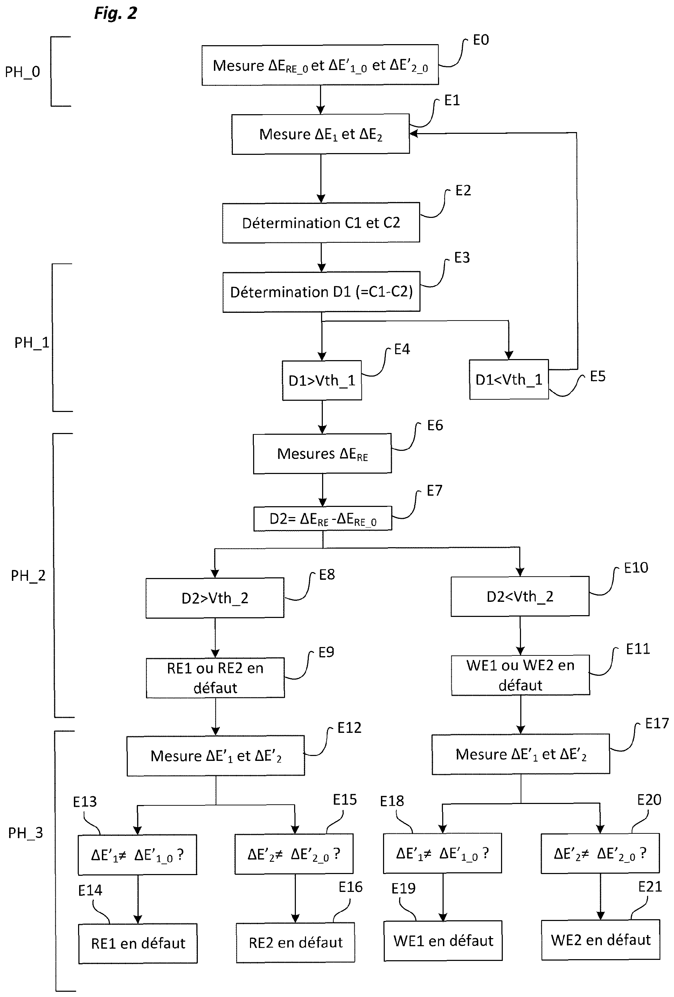

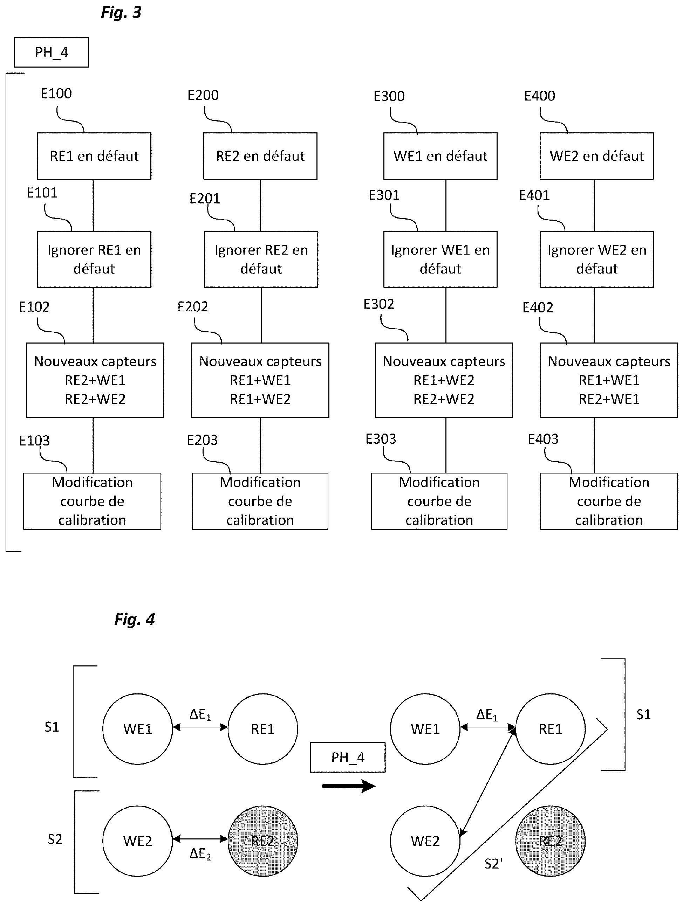

Partant de cette architecture à deux capteurs électrochimiques de type potentiométrique en redondance, le principe du procédé de contrôle de l'invention est décrit ci-dessous en liaison avec la figure 2 et la figure 3 :

**Phase d'initialisation** :

Il s'agit d'une phase dans laquelle l'unité de contrôle récupère des premières valeurs correspondant à l'état de fonctionnement initial de chaque capteur électrochimique.
Cette phase d'initialisation PH_0 est avantageusement mise en œuvre lors de la mise en route des capteurs et après un premier contact avec le milieu étudié.

E0 : L'unité de contrôle UC récupère ainsi les valeurs suivantes :

- $\Delta E_{RE\_0}$ qui correspond à la différence de potentiel entre les deux électrodes de référence RE1, RE2 à l'instant initial. Il faut noter que cette valeur sera en théorie faible (par exemple inférieure à 100 mV, et même inférieure à 25 mV puisque les électrodes sont identiques et fabriquées de manière collective, par un même procédé de sérigraphie).
- $\Delta E'_{1\_0}$ qui correspond à la différence de potentiel à l'état initial entre la première électrode de travail WE1 et la deuxième électrode de référence RE2.
- $\Delta E'_{2\_0}$ qui correspond à la différence de potentiel à l'état initial entre la deuxième électrode de travail WE2 et la première électrode de référence RE1.

**Phase de test et phase de défaut**

Tout au long du processus, l'unité de contrôle UC détermine le paramètre chimique à surveiller. Dans cet exemple, le paramètre chimique surveillé est la concentration d'un analyte.

E1 : L'unité de contrôle UC acquière les valeurs $\Delta E_1$ et $\Delta E_2$ à l'aide des deux capteurs électrochimiques S1, S2.

E2 : L'unité de contrôle UC détermine les concentrations C1 et C2 tout au long du processus, à l'aide des courbes de calibration des deux capteurs électrochimiques S1, S2.

L'unité de contrôle UC met en œuvre une phase de test PH_1.

Lors de la phase de test PH_1, l'unité de contrôle UC est configurée pour comparer les concentrations C1 et C2 mesurées à un même instant. Ce test peut être effectué après chaque mesure ou après plusieurs mesures.

E3 : L'unité de contrôle UC calcule un premier écart D1 entre les deux concentrations C1 et C2.

E4 : Si ce premier écart D1 dépasse une première valeur seuil Vth_1 (par exemple fixée à 10%), l'unité de contrôle UC active la phase de défaut PH_2.

Il faut noter que la première valeur seuil Vth_1 est choisie suffisamment grande pour être sûr qu'il existe bien un défaut.

E5 : Dans le cas où le test est négatif, le processus poursuit son cours et le process reprend à l'étape E1.

Il faut noter que, en cas de présence d'un défaut à l'étape E4, l'unité de contrôle UC est avantageusement amenée à ne plus injecter les mesures dans la régulation du processus. Les mesures étant potentiellement erronées, il est nécessaire de ne pas venir perturber le processus en cours.

E6 : Lors de la phase de défaut PH_2, l'unité de contrôle UC acquière la valeur $\Delta E_{RE}$ qui correspond à la différence de potentiel entre les deux électrodes de référence RE1, RE2 à l'instant courant.

E7 : L'unité de contrôle UC effectue ensuite une comparaison entre la valeur $\Delta E_{RE}$ et la valeur $\Delta E_{RE\_0}$ mesurée lors de la phase d'initialisation PH_0 pour déterminer un deuxième écart D2 entre ces deux valeurs.

Partant de cette comparaison, l'unité de contrôle UC peut déterminer si le défaut provient de l'une des électrodes de référence ou de l'une des électrodes de travail.

E8 + E9 : Si le deuxième écart D2 dépasse une deuxième valeur seuil Vth_2 (par exemple choisie à 10%), l'unité de contrôle UC conclut que le défaut provient de l'une des deux électrodes de référence RE1, RE2.

E10 + E11 : Si le deuxième écart D2 est au-dessous de la deuxième valeur seuil Vth_2 (par exemple choisie à 10%), l'unité de contrôle UC conclut que le défaut provient de l'une des deux électrodes de travail WE1, WE2.

Dans chacun de ces deux cas, l'unité de contrôle UC est configurée pour déterminer quelle est l'électrode défaillante lors d'une phase d'identification de l'électrode défaillante PH_3.

### Phase d'identification de l'électrode défaillante

La phase d'identification de l'électrode défaillante PH_3 est mise en œuvre pour chacun des deux cas cités ci-dessus.

E12 : Dans le premier cas, l'unité de contrôle mesure $\Delta E'_1$ et $\Delta E'_2$.

$\Delta E'_1$ correspond à la différence de potentiel entre la première électrode de travail WE1 et la deuxième électrode de référence RE2.

$\Delta E'_2$ correspond à la différence de potentiel entre la deuxième électrode de travail WE2 et la première électrode de référence RE1.

E13 : L'unité de contrôle UC compare la valeur $\Delta E'_1$ avec la valeur $\Delta E'_{1\_0}$ mesurée lors de la phase d'initialisation PH_0.

E14 : En cas de différence, l'unité de contrôle UC conclut que l'électrode défaillante est la première électrode de référence RE1.

E15 L'unité de contrôle compare la valeur $\Delta E'_2$ avec la valeur $\Delta E'_{2\_0}$ mesurée lors de la phase d'initialisation PH_0.

E16 : En cas de différence, l'unité de contrôle UC conclut que l'électrode défaillante est la deuxième électrode de référence RE2.

Comme indiqué ci-dessus, si le deuxième écart D2 est au-dessous de la deuxième valeur seuil Vth_2 (par exemple choisie à 10%), l'unité de contrôle UC conclut que le défaut provient de l'une des deux électrodes de travail (étape E11).

E17 : Dans ce deuxième cas, l'unité de contrôle UC mesure également $\Delta E'_1$ et $\Delta E'_2$. $\Delta E'_1$ correspond à la différence de potentiel entre la première électrode de travail WE1 et la deuxième électrode de référence RE2.

$\Delta E'_2$ correspond à la différence de potentiel entre la deuxième électrode de travail WE2 et la première électrode de référence RE1.

E18 : L'unité de contrôle UC compare la valeur $\Delta E'_1$ avec la valeur $\Delta E'_{1\_0}$ mesurée lors de la phase d'initialisation PH_0.

E19 : En cas de différence, l'unité de contrôle UC conclut que l'électrode défaillante est la première électrode de travail WE1.

E20 : L'unité de contrôle UC compare la valeur $\Delta E'_2$ avec la valeur $\Delta E'_{2\_0}$ mesurée lors de la phase d'initialisation PH_0.

E21 : En cas de différence, l'unité de contrôle UC conclut que l'électrode défaillante est la deuxième électrode de travail WE2.

Une fois l'électrode défaillante identifiée, l'unité de contrôle UC est configurée pour mettre en œuvre une phase de remédiation, permettant ainsi de poursuivre le processus en mode légèrement dégradé.

### Phase de remédiation

En liaison avec la figure 3, cette phase de remédiation PH_4 est la suivante :

E100 + E200 : L'électrode défaillante est l'une des deux électrodes de référence RE1 ou RE2.

E101 + E201 : L'unité de contrôle UC est configurée pour ignorer l'électrode de référence défaillante.

E102 + E202 : L'unité de contrôle UC est configurée pour activer un nouveau capteur électrochimique entre chaque électrode de travail et l'électrode de référence non défaillante. On dispose ainsi de deux capteurs électrochimiques qui partagent la même électrode de référence.

Dans le cas où la première électrode de référence RE1 est défaillante, un premier capteur est donc constitué de la deuxième électrode de référence RE2 et de la première électrode de travail WE1 et un deuxième capteur est constitué de la deuxième électrode de référence RE2 et de la deuxième électrode de travail WE2 (E102).

Dans le cas où la deuxième électrode de référence RE2 est défaillante, un premier capteur est donc constitué de la première électrode de référence RE1 et de la première électrode de travail WE1 et un deuxième capteur est constitué de la première électrode de référence RE1 et de la deuxième électrode de travail WE2 (E202).

E103 + E203 : L'unité de contrôle UC est également configurée pour recalculer les paramètres (sensibilité, décalage/offset) de la courbe de calibration adaptée à chacun de ces deux nouveaux capteurs électrochimiques, en utilisant $\Delta E_{RE\_0}$ mesurée lors de la phase d'initialisation.

E300 + E400 : L'électrode défaillante est une électrode de travail WE1 ou WE2.

E301 + E401 : L'unité de contrôle UC est configurée pour ignorer l'électrode de travail défaillante.

E302 + E402 : L'unité de contrôle UC est ensuite configurée pour activer un nouveau capteur électrochimique entre chaque électrode de référence et l'électrode de travail non défaillante. On dispose ainsi de deux capteurs électrochimiques qui utilisent deux électrodes de référence distinctes et une même électrode de travail.

Dans le cas où la première électrode de travail WE1 est défaillante, un premier capteur est donc constitué de la première électrode de référence RE1 et de la deuxième électrode de travail WE2 et un deuxième capteur est constitué de la deuxième électrode de référence RE2 et de la deuxième électrode de travail WE2 (E302).

Dans le cas où la deuxième électrode de travail WE2 est défaillante, un premier capteur est donc constitué de la première électrode de référence RE1 et de la première électrode de travail WE1 et un deuxième capteur est constitué de la deuxième électrode de référence RE2 et de la première électrode de travail WE1 (E402).

E303 + E403 : L'unité de contrôle UC est également configurée pour recalculer la courbe de calibration adaptée à chacun de ces deux nouveaux capteurs électrochimiques, en utilisant $\Delta E_{RE\_0}$ mesurée lors de la phase d'initialisation.

La figure 4 montre un exemple de réalisation de la phase de remédiation lorsque l'électrode défaillante détectée est la deuxième électrode de référence RE2 (représentée en grisé). Dans ce cas, on constate qu'un nouveau capteur S2' est créé entre la deuxième électrode de travail WE2 et la première électrode de référence RE1. L'unité de contrôle UC ne tient plus compte de la mesure de la deuxième électrode de référence RE1.

Le procédé de l'invention a été décrit pour un système de mesure à deux capteurs électrochimiques en redondance. Le principe s'applique cependant à un système de mesure à plus de deux capteurs électrochimiques (voir ci-dessous).

## Système de mesure à au moins trois capteurs électrochimiques

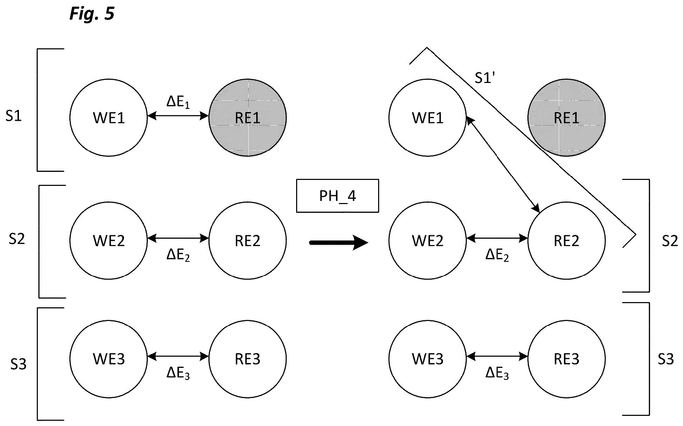

Un tel système de mesure est représenté sur la figure 5. La disposition des électrodes en rectangle est bien entendu choisie à titre d'exemple.

Dans le cas de ce système de mesure à trois capteurs électrochimiques S1, S2, S3 en redondance, lors de la phase d'initialisation et les phases ultérieures, l'unité de contrôle UC effectue les mesures :

$\Delta E_{RE12\_0}$ qui correspond à la différence de potentiel entre la première électrode de référence RE1 et la deuxième électrode de référence RE2 à l'état initial.

$\Delta E_{RE13\_0}$ qui correspond à la différence de potentiel entre la première électrode de référence RE1 et la troisième électrode de référence RE3 à l'état initial.

$\Delta E_{RE23\_0}$ qui correspond à la différence de potentiel entre la deuxième électrode de référence RE2 et la troisième électrode de référence RE3 à l'état initial.

$\Delta E'_{12\_0}$ qui correspond à la différence de potentiel entre la première électrode de travail WE1 et la deuxième électrode de référence RE2 à l'état initial.

$\Delta E'_{13\_0}$ qui correspond à la différence de potentiel entre la première électrode de travail WE1 et la troisième électrode de référence RE3 à l'état initial.

$\Delta E'_{21\_0}$ qui correspond à la différence de potentiel entre la deuxième électrode de travail WE2 et la première électrode de référence RE1 à l'état initial.

$\Delta E'_{23\_0}$ qui correspond à la différence de potentiel entre la deuxième électrode de travail WE2 et la troisième électrode de référence RE3 à l'état initial.

$\Delta E'_{31\_0}$ qui correspond à la différence de potentiel entre la troisième électrode de travail WE3 et la première électrode de référence RE1 à l'état initial.

$\Delta E'_{32\_0}$ qui correspond à la différence de potentiel entre la troisième électrode de travail WE3 et la deuxième électrode de référence RE2 à l'état initial.

Les mêmes mesures sont effectuées lors du processus, et des phases de défaut et d'identification de l'électrode défaillante, en appliquant de manière identique les étapes décrites ci-dessus pour un système à deux capteurs électrochimiques.

Il faut noter que dans le cas d'un système à au moins trois capteurs électrochimiques, l'unité de contrôle UC tient avantageusement compte de l'organisation spatiale des électrodes lors de l'activation de chaque nouveau capteur pendant la phase de remédiation. Autrement dit, elle aura tendance à favoriser les électrodes les plus proches entre elles. Par exemple, si la première électrode de référence RE1 du premier capteur électrochimique S1 est défaillante, l'unité de contrôle UC sera amenée à associer la première électrode de travail WE1 du premier capteur avec la deuxième électrode de référence RE2 du deuxième capteur si celle-ci est plus proche spatialement que la troisième électrode de référence RE3. En effet, l'organisation spatiale des électrodes joue un rôle dans la qualité et fiabilité des mesures et les électrodes d'un même capteur doivent avantageusement être suffisamment proches pour que le chemin électrique reste le plus court possible. La figure 5 illustre ce principe. La première électrode de référence RE1 est défaillante (représentée en grisé). La première électrode de travail WE1 est alors associée à la deuxième électrode de référence RE2, la plus proche spatialement, lors de la phase de remédiation PH_3, pour former un nouveau capteur S1'. L'unité de contrôle UC ne tient plus compte de la mesure de la première électrode de référence RE1.

L'invention présente ainsi de nombreux avantages, parmi lesquels :

- La possibilité de détecter facilement la présence d'un défaut dans le système ;
- La possibilité d'identifier une électrode défaillante dans le système ;
- La possibilité de mettre en place une phase de remédiation en cas de défaillance d'une électrode ;
- La possibilité, grâce à la phase de remédiation, de poursuivre le processus, en mode légèrement dégradé ;
- Un principe particulièrement pertinent lorsque le système comporte au moins trois capteurs électrochimiques ;

## Revendications

**1.** Procédé de contrôle d'un système de mesure, ledit système de mesure comportant au moins deux capteurs électrochimiques (S1, S2) de même type en redondance, mis en contact avec un même milieu à analyser pour mesurer parallèlement un même analyte, le premier capteur électrochimique (S1) comportant une première électrode de référence (RE1) et une première électrode de travail (WE1), et le deuxième capteur électrochimique (S2) comportant une deuxième électrode de référence (RE2) et une deuxième électrode de travail (WE2), chaque capteur électrochimique étant apte à mesurer des valeurs d'une grandeur électrique en vue de déterminer des valeurs d'un même paramètre chimique à partir d'une courbe de calibration, ledit procédé consistant à exécuter une phase de remédiation (PH_3) lorsque l'une des électrodes de référence ou de travail des deux capteurs électrochimiques est défaillante, ladite phase de remédiation étant **caractérisée en ce qu'**elle consiste à :

- Lorsque l'électrode défaillante est la première électrode de référence (RE1) ou la deuxième électrode de référence (RE2),

  ◦ Activer un nouveau capteur électrochimique entre chaque électrode de travail et l'électrode de référence non défaillante, et
  ◦ Déterminer une courbe de calibration associée à chaque nouveau capteur,

- Lorsque l'électrode défaillante est la première électrode de travail (WE1) ou la deuxième électrode de travail (WE2),

  ◦ Activer un nouveau capteur électrochimique entre l'électrode de travail non défaillante et chaque électrode de référence,
  ◦ Déterminer une courbe de calibration associée à chaque nouveau capteur.

**2.** Procédé selon la revendication 1, **caractérisé en ce qu'**il comporte une phase préalable d'initialisation (PH_0) comprenant des étapes de :

  ◦ Mesure d'une valeur électrique $\Delta E_{RE\_0}$ entre la première électrode de référence et la deuxième électrode de référence,
  ◦ Mesure d'une valeur électrique $\Delta E'_{1\_0}$ entre la première électrode de référence et la deuxième électrode de travail et d'une valeur électrique $\Delta E'_{2\_0}$ entre la deuxième électrode de référence et la première électrode de travail.

**3.** Procédé selon la revendication 2, **caractérisé en ce qu'**il comporte, après la phase d'initialisation (PH_0), une phase de test (PH_1) par comparaison, avec une première valeur seuil Vth_1, d'un premier écart D1 entre une première valeur (C1) dudit paramètre chimique mesurée à l'aide du premier capteur électrochimique et une deuxième valeur (C2) dudit paramètre chimique mesurée à l'aide du deuxième capteur électrochimique.

**4.** Procédé selon la revendication 3, **caractérisé en ce qu'**il comporte, après la phase de test :

- Une phase de défaut (PH_2), activée lorsque ledit premier écart D1 dépasse ladite première valeur seuil Vth_1,
- Une phase d'identification d'une électrode défaillante par comparaison entre un deuxième écart D2 et une deuxième valeur seuil Vth_2, ledit deuxième écart D2 étant déterminé entre la valeur électrique $\Delta E_{RE\_0}$ mesurée lors de la phase d'initialisation et une valeur électrique $\Delta E_{RE}$ mesurée entre la première électrode de référence (RE1) et la deuxième électrode de référence (RE2),
- Ladite électrode défaillante étant la première électrode de référence (RE1) ou la deuxième électrode de référence (RE2) lorsque le deuxième écart D2 est supérieur à la deuxième valeur seuil Vth_2,
- Ladite électrode défaillante étant la première électrode de référence (RE1) lorsqu'une valeur électrique $\Delta E'_1$ mesurée entre la première électrode de référence (RE1) et la deuxième électrode de travail (WE2) est différente de la valeur électrique $\Delta E'_{1\_0}$ mesurée lors de la phase d'initialisation,
- Ladite électrode défaillante étant la deuxième électrode de référence (RE2) lorsqu'une valeur électrique $\Delta E'_2$ mesurée entre la deuxième électrode de référence (RE2) et la première électrode de travail (WE1) est différente de la valeur électrique $\Delta E'_{2\_0}$ mesurée lors de la phase d'initialisation,
- Ladite électrode défaillante étant la première électrode de travail (WE1) ou la deuxième électrode de travail (WE2) lorsque le deuxième écart D2 est inférieur à la deuxième valeur seuil Vth_2,
- Ladite électrode défaillante étant la première électrode de travail (WE1) lorsqu'une valeur électrique $\Delta E'_1$ mesurée entre la première électrode de référence (RE1) et la deuxième électrode de travail (WE2) est différente de la valeur électrique $\Delta E'_{1\_0}$ mesurée lors de la phase d'initialisation,
- Ladite électrode défaillante étant la deuxième électrode de travail (WE2) lorsqu'une valeur électrique $\Delta E'_2$ mesurée entre la deuxième électrode de **référence** (RE2) et la première électrode de travail (WE1) est différente de la valeur électrique $\Delta E'_{2\_0}$ mesurée lors de la phase d'initialisation.

**5.** Procédé selon l'une des revendications 1 à 4, **caractérisé en ce que** lorsque le système de mesure comporte au moins un troisième capteur électrochimique (S3) du même type que le premier capteur électrochimique et que le deuxième capteur électrochimique, comportant une troisième électrode de référence (RE3) et une troisième électrode de travail (WE3), ladite phase de remédiation (PH_3) est configurée pour tenir compte d'un paramètre spatial entre les électrodes non défaillantes lors de l'activation de chaque nouveau capteur électrochimique.

6. Système de mesure comportant au moins deux capteurs électrochimiques (S1, S2) de même type en redondance, mis en contact avec un même milieu à analyser pour mesurer parallèlement un même analyte, le premier capteur électrochimique (S1) comportant une première électrode de référence (RE1) et une première électrode de travail (WE1), et le deuxième capteur électrochimique (S2) comportant une deuxième électrode de référence (RE2) et une deuxième électrode de travail (WE2), chaque capteur électrochimique étant employé pour déterminer un même paramètre à partir de sa courbe de calibration, ledit système de mesure comportant une unité de contrôle (UC), **caractérisé en ce que** l'unité de contrôle est configurée pour mettre en œuvre le procédé de contrôle tel que défini dans l'une des revendications 1 à 5.

7. Système selon la revendication 6, **caractérisé en ce que** chaque capteur électrochimique est de type potentiométrique, ampérométrique ou à mesure d'impédance.

8. Système de mesure selon la revendication 6 ou 7, **caractérisé en ce que** la grandeur électrique est une différence de potentiel.

9. Système de mesure selon l'une des revendications 6 à 8, **caractérisé en ce que** le paramètre chimique est une concentration d'un analyte présent dans le milieu à analyser.

*Fig. 1*

**Fig. 2**

PH_0

Mesure $\Delta E_{RE\_0}$ et $\Delta E'_{1\_0}$ et $\Delta E'_{2\_0}$ — E0

Mesure $\Delta E_1$ et $\Delta E_2$ — E1

Détermination C1 et C2 — E2

PH_1

Détermination D1 (=C1-C2) — E3

D1>Vth_1 — E4

D1<Vth_1 — E5

Mesures $\Delta E_{RE}$ — E6

$D2= \Delta E_{RE} -\Delta E_{RE\_0}$ — E7

PH_2

D2>Vth_2 — E8

D2<Vth_2 — E10

RE1 ou RE2 en défaut — E9

WE1 ou WE2 en défaut — E11

Mesure $\Delta E'_1$ et $\Delta E'_2$ — E12

Mesure $\Delta E'_1$ et $\Delta E'_2$ — E17

PH_3

E13
$\Delta E'_1 \neq \Delta E'_{1\_0}$ ?

E15
$\Delta E'_2 \neq \Delta E'_{2\_0}$ ?

E18
$\Delta E'_1 \neq \Delta E'_{1\_0}$ ?

E20
$\Delta E'_2 \neq \Delta E'_{2\_0}$ ?

E14
RE1 en défaut

E16
RE2 en défaut

E19
WE1 en défaut

E21
WE2 en défaut

**Fig. 3**

PH_4

E100
RE1 en défaut

E101
Ignorer RE1 en défaut

E102
Nouveaux capteurs
RE2+WE1
RE2+WE2

E103
Modification courbe de calibration

E200
RE2 en défaut

E201
Ignorer RE2 en défaut

E202
Nouveaux capteurs
RE1+WE1
RE1+WE2

E203
Modification courbe de calibration

E300
WE1 en défaut

E301
Ignorer WE1 en défaut

E302
Nouveaux capteurs
RE1+WE2
RE2+WE2

E303
Modification courbe de calibration

E400
WE2 en défaut

E401
Ignorer WE2 en défaut

E402
Nouveaux capteurs
RE1+WE1
RE2+WE1

E403
Modification courbe de calibration

**Fig. 4**

S1

WE1 $\Delta E_1$ RE1

S2

WE2 RE2
$\Delta E_2$

PH_4

S1

WE1 $\Delta E_1$ RE1

WE2 RE2

S2'

**Fig. 5**

Europäisches
Patentamt

European
Patent Office

Office européen
des brevets

# RAPPORT DE RECHERCHE EUROPEENNE

**Numéro de la demande**

EP 25 22 7295

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2024/366127 A1 (YANG CUIJUN [CN]) 7 novembre 2024 (2024-11-07) * alinéas [0025], [0039], [0083] - [0085] * * figure 4 * | 1-9 | INV. G01N27/416 |
| | ----- | | |
| X | US 2024/324912 A1 (YANG CUIJUN [CN]) 3 octobre 2024 (2024-10-03) | 1,5-9 | |
| A | * alinéas [0063], [0064], [0069] - [0071] * * figures 1,2,4 * | 2-4 | |
| | ----- | | |
| A | CN 117 491 452 A (SHENZHEN GOODIX TECH CO LTD) 2 février 2024 (2024-02-02) * page 10, alinéas 5,6 * * page 12, alinéa 1 * * page 14, alinéa 4 * | 1-9 | |
| | ----- | | **DOMAINES TECHNIQUES RECHERCHES (IPC)** |
| A | US 2015/164388 A1 (VARSAVSKY ANDREA [US] ET AL) 18 juin 2015 (2015-06-18) * alinéas [0233], [0234] * | 1-9 | G01N |
| | ----- | | |

Le présent rapport a été établi pour toutes les revendications

| Lieu de la recherche | Date d'achèvement de la recherche | Examinateur |
|---|---|---|
| Munich | 4 mai 2026 | Stussi, Elisa |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**EP 4 775 973 A1**

## ANNEXE AU RAPPORT DE RECHERCHE EUROPEENNE
## RELATIF A LA DEMANDE DE BREVET EUROPEEN NO.

EP 25 22 7295

04-05-2026

| Document brevet cité au rapport de recherche | Date de publication | Membre(s) de la famille de brevet(s) | | Date de publication |
|---|---|---|---|---|
| US 2024366127 A1 | 07-11-2024 | CN | 115474933 A | 16-12-2022 |
| | | CN | 115598196 A | 13-01-2023 |
| | | EP | 4346594 A1 | 10-04-2024 |
| | | EP | 4366617 A1 | 15-05-2024 |
| | | US | 2024268716 A1 | 15-08-2024 |
| | | US | 2024366127 A1 | 07-11-2024 |
| | | WO | 2022252746 A1 | 08-12-2022 |
| | | WO | 2023279311 A1 | 12-01-2023 |
| US 2024324912 A1 | 03-10-2024 | EP | 4380446 A1 | 12-06-2024 |
| | | US | 2024324912 A1 | 03-10-2024 |
| | | WO | 2023010539 A1 | 09-02-2023 |
| CN 117491452 A | 02-02-2024 | CN | 117491452 A | 02-02-2024 |
| | | WO | 2025102570 A1 | 22-05-2025 |
| US 2015164388 A1 | 18-06-2015 | AU | 2014367039 A1 | 16-06-2016 |
| | | AU | 2019226130 A1 | 26-09-2019 |
| | | CA | 2931955 A1 | 25-06-2015 |
| | | CA | 3111452 A1 | 25-06-2015 |
| | | CN | 106028932 A | 12-10-2016 |
| | | CN | 109984753 A | 09-07-2019 |
| | | CN | 109984754 A | 09-07-2019 |
| | | CN | 109984755 A | 09-07-2019 |
| | | EP | 3082597 A2 | 26-10-2016 |
| | | EP | 3733065 A1 | 04-11-2020 |
| | | JP | 6339204 B2 | 06-06-2018 |
| | | JP | 6502552 B2 | 17-04-2019 |
| | | JP | 6717997 B2 | 08-07-2020 |
| | | JP | 2017500942 A | 12-01-2017 |
| | | JP | 2018149327 A | 27-09-2018 |
| | | JP | 2019115714 A | 18-07-2019 |
| | | KR | 20160098487 A | 18-08-2016 |
| | | US | 2015164383 A1 | 18-06-2015 |
| | | US | 2015164384 A1 | 18-06-2015 |
| | | US | 2015164385 A1 | 18-06-2015 |
| | | US | 2015164388 A1 | 18-06-2015 |
| | | US | 2015164389 A1 | 18-06-2015 |
| | | US | 2017150911 A1 | 01-06-2017 |
| | | US | 2017209080 A1 | 27-07-2017 |
| | | US | 2017209082 A1 | 27-07-2017 |
| | | US | 2018184951 A1 | 05-07-2018 |
| | | US | 2019167170 A1 | 06-06-2019 |
| | | US | 2019343434 A1 | 14-11-2019 |
| | | US | 2019357820 A1 | 28-11-2019 |
| | | US | 2021161439 A1 | 03-06-2021 |

EPO FORM P0460

page 1 de 2

**ANNEXE AU RAPPORT DE RECHERCHE EUROPEENNE
RELATIF A LA DEMANDE DE BREVET EUROPEEN NO.**

EP 25 22 7295

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-05-2026

| Document brevet cité au rapport de recherche | Date de publication | Membre(s) de la famille de brevet(s) | Date de publication |
|---|---|---|---|
| | | US 2021386335 A1 | 16-12-2021 |
| | | US 2022354394 A1 | 10-11-2022 |
| | | WO 2015094576 A2 | 25-06-2015 |

Pour tout renseignement concernant cette annexe : voir Journal Officiel de l'Office européen des brevets, No.12/82

page 2 de 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2024366127 A1

- US 2024324912 A1